# EUROPEAN PATENT SPECIFICATION

(11) **EP 3 774 406 B1**
(45) Date of publication and mention of the grant of the patent: **11.05.2022**
(21) Application number: 19717378.4
(22) Date of filing: 29.03.2019
(51) Int. Cl.: B60C 23/04, B60C 29/00

(54) **CROSSOVER WIRELESS TIRE MONITORING SYSTEM DEVICE**
SYSTEMVORRICHTUNG ZUR DRAHTLOSEN CROSSOVER-REIFENÜBERWACHUNG
DISPOSITIF DE SYSTÈME DE SURVEILLANCE DE PNEU SANS FIL DE CROISEMENT

(30) Priority: 11.04.2018 MY PI2018701434
(43) Date of publication of application: 17.02.2021
(73) Proprietor: Salutica Allied Solutions Sdn. Bhd., 31500 Lahat Ipoh, Perak (MY)
(72) Inventor: LIM, Chong Shyh, Perak, 31500 (MY)
(74) Representative: Cabinet Chaillot
(86) International application number: PCT/MY2019/050024
(87) International publication number: WO 2019/199158

(56) References cited:
- DE-A1- 4 133 993
- OA-A- 10 074
- US-B1- 6 194 998

## Description

### FIELD OF INVENTION

The present invention generally relates to a tire monitoring system device, and more particularly to a crossover wireless tire monitoring system device.

### BACKGROUND OF INVENTION

Proper tire inflation for safety, wear and fuel efficiency is of significant importance to achieve the intended levels of optimum operating conditions and performances. The natural norms of the tire industry are stringent, and are incessantly growing due to the product liability, quality standards and the safety awareness of consumers. Under such circumstances, operation specifications of tires will typically be provided by tire manufacturers, while tire inflation characteristics will be specified by automobile manufacturers. However, these specifications do not necessarily mean that the tire operating conditions are particularly correct for the tires on the vehicle even if they are followed conscientiously. Compatibly, the ultimate situation will therefore be seen in the event that air pressure in a particular tire is sufficient to produce a complete road-engaging contact over the entire tread width, so that the weight of the vehicle is borne equally throughout the road-engagement area between the shoulders and across the central portion of the tire. As such, the tread of the tire will wear evenly, and the tread life will be prolonged, and maximum safety will be results from the maximum grip or friction of the tire on the road.

Various attempts have been made to improve the tire monitoring system device. However, many attempts have not been completely satisfactory for one or more reasons. For example, some of tire monitoring system devices are unsatisfactory because of their design, configuration, component parts and technologies appear to have certain drawbacks, such that they have not become widely used. Accordingly, there are two types of direct Tire Pressure Monitoring Systems (TPMS) currently available in the market, i.e.: a) Internal TPMS, and b) External TPMS.

The internal TPMS usually includes a sensor that is being installed inside the tire by either strapping around the wheel or by replacing the existing valve stem. The sensors in these internal systems also typically run on independent power sources, e.g. individual batteries for each sensor in each tire. However, as these systems are installed within the tires, it creates a problem when the batteries run out. Most, if not all, internal TPMS are provided in a wholepiece manner whereby the batteries are not replaceable. This is because the batteries have to be permanently affixed within the unit in a manner where the battery will not be affected by the internal heat and pressure of the tire. As such, these batteries become inaccessible to the user and cannot be replaced. Once the batteries run out, the user will be required to send their vehicle to a workshop for the tires to be removed and for the entire internal TPMS system to be replaced. This becomes an encumbrance and much higher replacement and labour costs will be incurred by the user.

As for the external TPMS, such systems include sensors that are being installed onto the valve stem outside the tire. However, some system devices are found to be insufficient in preventing theft as these units can be removed completely. Furthermore, as these units are exposed outside the tire, it can also be vulnerable to external damage.

Additionally, as the sensors are located outside the tire and measurements are taken from there, there is a systemic inaccuracy in measurement, particularly in relation to temperature readings, since there may be losses between the internals of the tire and the actual point of measurement. This systemic inaccuracy in measuring temperature can also be due to the externally mounted sensor being affected by external environments. For example, there can be a cooling effect of an externally mounted sensor during when the vehicle is in motion or conversely, a higher temperature reading may occur when the sensor is exposed to external heat.

As such, whether in terms of internal TPMS or external TPMS, special monitoring and care may be required for faultless operation. Moreover, the design and configuration of existing tire monitoring system devices are substantially bulky and complex, adding numerous parts that may require additional care in maintenance.

Some existing arts, such as US 6194998 B1 discloses a power supply unit for a pressure-sensing device that is concealed by a tire of a vehicle wheel. Accordingly, the power supply unit is adapted for use with a pressure-sensing device that is mounted on a wheel rim inside an airtight chamber confined by the wheel rim and a pneumatic tire. The power supply unit includes a valve housing, an air valve member, and a battery housing. The valve housing is mounted on the wheel rim with an inner end portion thereof extending into the airtight chamber and with an outer end portion thereof extending outwardly of the wheel rim. The valve housing is provided with a housing conductor for electrical connection with the pressure-sensing device. The air valve member is mounted in the valve housing, and includes a spring-loaded valve stem with a conductive stem body that is connected electrically to the pressure-sensing device, and that is electrically insulated from the housing conductor. The battery housing is mounted on the outer end portion of the valve housing and receives a battery cell therein. The battery housing has first and second battery contacts to interconnect electrically first and second terminals of the battery cell with the housing conductor and the stem body, respectively.

OA 10074 A discloses a tyre fault warning device. Accordingly, the tyre fault warning device comprising a fault warning means to be carried by a vehicle wheel wherein the fault warning means is adapted to be coupled to or incorporated in a tyre valve, the fault warning means including radio signal means to transmit a radio signal for reception by receiver means provided with fault indicating means, sensing means for location in a tyre responsive to pressure and/or temperature conditions in the tyre, and switch means actuable by said sensing means to activate said radio signal means for the issue of a radio warning signal, the switch means being located in a housing so as to be shielded from the air in the tyre.

DE 4133993 A1 discloses a motor vehicle pneumatic tyres pressure measuring and indicating which containing valve with pressure sensor, wireless signal transmitter, activation unit with receiver, remote controller with pressure signal receiver, activation signal transmitter, display. Accordingly, this invention provides a method of measuring and indicating the pressure in the pneumatic tyre of a motor vehicle which involves generating an activation signal remotely from the vehicle wheel. The signal is transmitted wirelessly, preferably infrared, to a receiver on the wheel and operates a pressure sensor activation device. The sensor output signal is amplified, processed to form a pressure signal and fed to a transmitter on the vehicle wheel which transmits the signal into the surroundings. The pressure signal is detected remotely from the vehicle wheel and a signal is formed to control an actual tyre pressure display.

In view of these and other shortcomings, it is desirous to provide an improved tire monitoring system device, and more particularly to a crossover wireless tire monitoring system device that is adapted to integrate or to combine both internal and external TPMS to overcome the aforementioned limitations and drawbacks. The crossover wireless tire monitor system device of the present invention and its combination of elements thereof will be described and/or exemplified in the detailed description.

### SUMMARY OF THE INVENTION

The present invention relates to crossover wireless tire monitoring system device for measuring one or more parameters relating to the condition of the tire. Accordingly, the crossover wireless tire monitoring system device includes the features of claim 1.

Accordingly, the built-in sensor of the internal module is powered by the built-in battery of the external module through cable wires to the power connector. The power connector is served to provide electrical interface connection between built-in sensor of the internal module and the built-in battery of external module, such that electricity power from the battery is able to be transferred to the sensor via the cable wires. It will be appreciated that the power connector is also served to provide easy plug and play installation of the internal module and external module.

In the preferred exemplary of the present invention, the crossover wireless tire monitor system device is adapted to replace the existing or original valve stem of the tire.

By way of example but not limitation, the built-in battery of the external module is provided with a battery compartment to accommodate one or more batteries. Preferably, but not limited to, the one or more batteries are standard type of coin cell battery. It will be appreciated that the built-in battery is protected by an air-tight cover. Accordingly, the air-tight cover is adapted to facilitates ease of battery replacement.

It will be appreciated that the external module is further provided with a rubber grommet to prevent air leak around valve stem hole of vehicle wheel or rim of the tire. Preferably, but not limited to, the external module is secured mounted onto the vehicle wheel or rim of the tire by one or more hex nuts.

The present invention consists of several novel features and a combination of parts hereinafter fully described and illustrated in the accompanying description and drawings, it being understood that various changes in the details may be made without departing from the scope of the invention or sacrificing any of the advantages of the present invention.

### BRIEF DESCRIPTION OF THE DRAWINGS

The present invention will be fully understood from the detailed description given herein below and the accompanying drawings, wherein:
FIG. 1 shows a perspective view of a crossover wireless tire monitoring system device in accordance with preferred exemplary of the present invention;
FIGS. 2a and 2b show the assembly of internal and external modules of the crossover wireless tire monitoring system device according to preferred exemplary of the present invention;
FIG. 3 shows a cross-sectional view of the crossover wireless tire monitoring system device according to preferred exemplary of the present invention.

### DETAILED DESCRIPTION OF THE PREFERRED EMBODIMENTS

The present invention aims to provides an improved tire monitoring system device, and more particularly to a crossover wireless tire monitoring system device which is simple and effective, lending in both to economy and simplicity of manufacture and higher convenience of use. It will be appreciated that the crossover wireless tire monitoring system device is able to operate reliably under conditions adverse to wireless transmissions, such as for example, under unfavourable weather conditions, extremely dirt and contamination. The present invention also facilitates prolonged periods of power consumption, and yet be able to substantially reduce in assembly and maintenance costs.

In the preferred exemplary of the present invention, the crossover wireless tire monitor system device includes a combination of internal and external modules that are able to provide the following advantages: -
a) Anti-theft - as the sensor unit is installed inside the tire, this provides a very good anti-theft feature;
b) Easy Battery Replacement - as the battery is located outside the tire, this provides convenience for user battery replacement;
c) Accuracy - as the sensor unit is located inside the tire, this offers better accuracy since the tire pressure and temperature measurement is taken directly from within the tire and it eliminates any losses;
d) Tiny Size - the combination of internal and external modules allow both battery compartment and sensor units to be designed in smaller size.

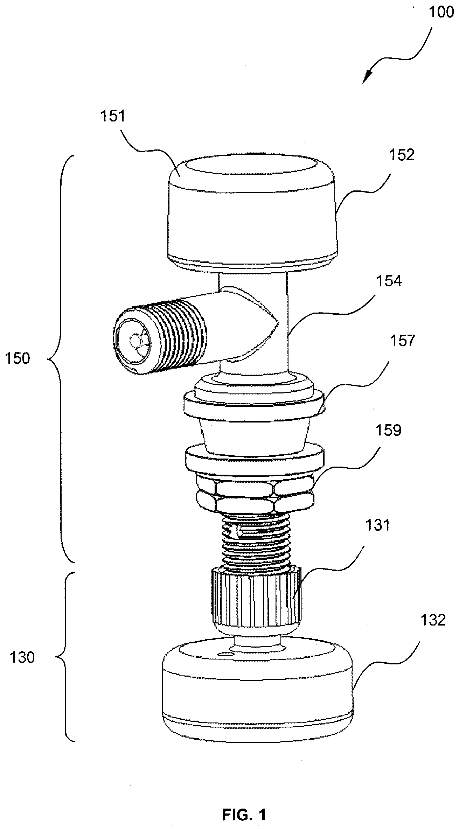

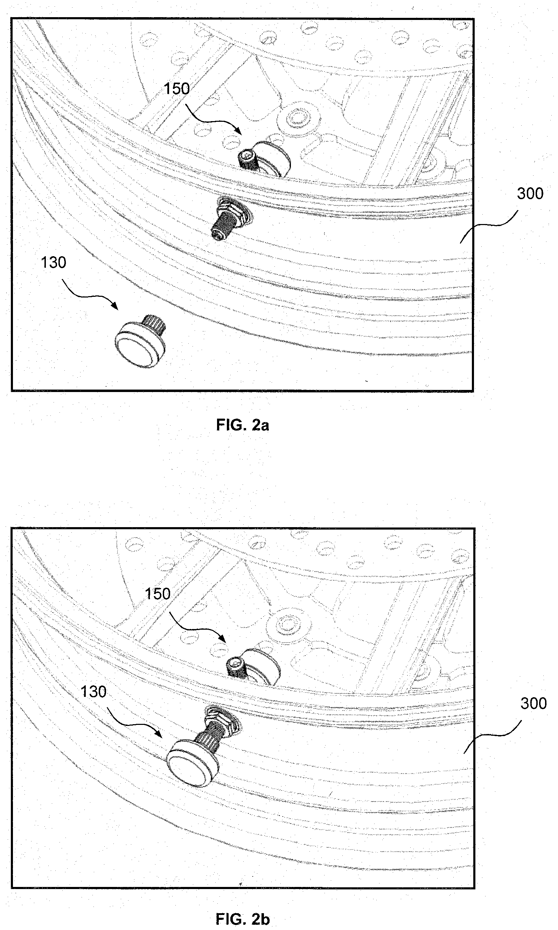

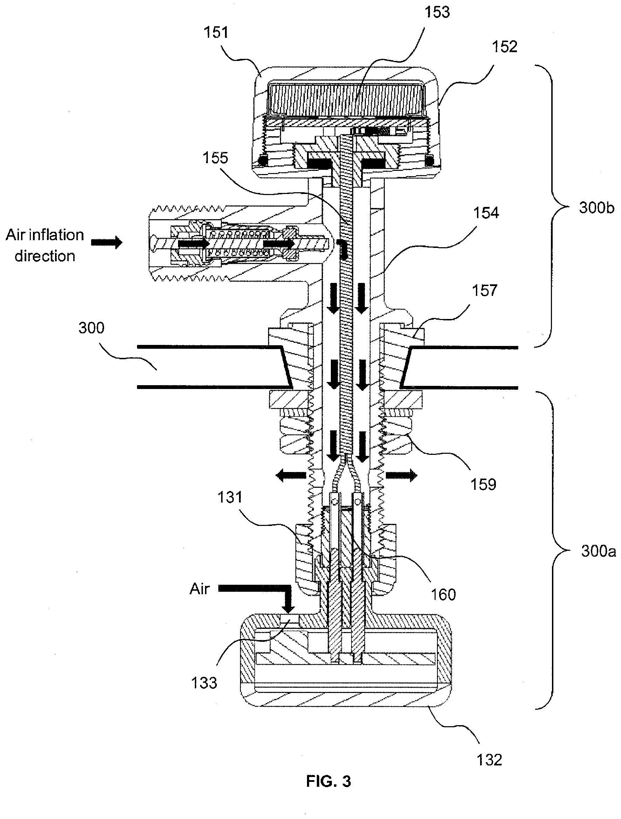

The crossover wireless tire monitor system device according to the preferred mode of carrying out the present invention will now be described in accordance to the accompanying drawings FIGS. 1 to 3, either individually or in any combination thereof.

Referring to the figures, the crossover wireless tire monitor system device (100) of the present invention generally includes a valve stem (154), an internal module (130) and an external module (150) are collaboratively connected through the valve stem (154) to form a single operative monitoring system device. Accordingly, the internal module (130) includes a built-in sensor (132) that is able to be integrally fixed or to be detachable from the valve stem (154). The external module (150) is equipped with a built-in battery (152) that is able to be detachable from the valve stem (154). It will be appreciated that the valve stem (154) can be a single head or dual head valve, such that the built-in battery (152) of the external module (150) can be detachable therefrom. By way of example, but not limitation, the valve stem (154) of dual head (as shown in FIG. 1) is preferably used for convenience, so that the user does not require to remove or detach the built-in battery (152) of the external module (150) during the air refilling. It should be noted that the crossover wireless tire monitor system device (100) is adapted to replace the existing or original valve stem of the tire. It will be appreciated that the internal module (130) is preferably located and embedded at inner rim (300a) of the tire, while the external module (150) is preferably mounted and exposed on outer rim (300b) of the tire.

In the preferred exemplary, the built-in sensor (132) of the internal module (130) is served to measure one or more parameters relating to the condition of the tire, such as for example, but not limited to, tire pressure, temperature, wheel speed, acceleration, and/or distance information of the vehicle. Accordingly, the built-in sensor (132) of the internal module (130) is provided with an air inlet hole (133) for the sensor to measure one or more parameters relating to the condition of the tire. It should be noted that the built-in sensor (132) of the internal module (130) is adapted to be integrally fixed or to be detachable from the valve stem (154). By way of example but not limitation, the internal module (130) is able to detachably connect to external module (150) via a power connector (160), and being secured by a self-rotatable threaded collar fastener (131). The self-rotatable threaded collar fastener (131), although exemplary, will be used herein in describing the configurations and functions of the present invention, however other forms, designs, styles and/or configurations of the structures, components, elements or assemblies thereof may also contemplate. As such, the self-rotatable threaded collar fastener (131) should not be construed as limiting in any way.

It will be appreciated that the built-in sensor (132) of the internal module (130) is preferably powered by the built-in battery (152) of the external module (150) through cable wires (155) to the power connector (160). Accordingly, the power connector (160) serves to provide electrical interface connection between built-in sensor (132) of the internal module (130) and the built-in battery (152) of external module (150), such that electricity power from the battery is able to be transferred to the sensor via the cable wires (155). The power connector (160) also serves to provide easy plug and play installation of the internal module (130) and external module (150).

In the preferred exemplary of the present invention, the built-in battery (152) of the external module (150) is adapted to be detachable from the valve stem (154). Preferably, the built-in battery (152) of the external module (150) is provided with a battery compartment to accommodate one or more batteries (153). By way of example but not limitation, the one or more batteries (153) are preferably standard type of coin cell battery. Preferably, but not limited to, the battery is protected by an air-tight cover (151). Accordingly, the air-tight cover (151) serves to protect the battery against environmental influences, such as, for example but not limited to, dirt, debris contaminants or water, and to provide impact protection, as well as heat and electrical insulation, within the battery compartment. The air-tight cover (151) also facilitates ease of battery replacement.

It will be appreciated that the external module (150) is further provided with a rubber grommet (157) to prevent air leak around valve stem hole of the vehicle wheel or rim (300) of the tire. By way of example, but not limitation, one or more hex nuts (159) may be used for securing the external module (150) onto the vehicle wheel or rim (300) of the tire. It must be noted that during installation, the external module (150) will replace the original or existing valve stem, and the rubber grommet (157) and one or more hex nuts (159) will be used for air sealing and for securing the external module (150) to the valve stem hole of the vehicle wheel or rim (300) of the tire, respectively.

In order to facilitate prolonged periods of power consumption to continuously generate an ultra-low power Bluetooth or wireless wave signal to extend the useful life of the battery, an antenna (not shown) for transmitting wireless signal relating to the tire conditions to associated units may be selectively placed in the battery compartment or inside the sensor unit, or the valve stem itself may act as the antenna.

## Claims

1. A crossover wireless tire monitoring system device (100) for measuring one or more parameters relating to the condition of the tire, the crossover wireless tire monitoring system device (100) includes:
a) a valve stem (154);
b) an internal module (130) with a built-in sensor (132) that is adapted to be integrally fixed or to be detachable from the valve stem (154);
c) an external module (150) with a built-in battery (152) that is adapted to be detachable from the valve stem (154);
**characterized in that** the valve stem (154) is a single head or dual head valve, such that a user does not require to remove or detach the built-in battery (152) of the external module (150) during air refilling in the event that dual head valve is used;
wherein the internal module (130) and the external module (150) are collaboratively connected through the valve stem (154) to form a single operative monitoring system device, said built-in sensor (132) of the internal module (130) is powered by the built-in battery (152) of the external module (150) through cable wires (155) to a power connector (160), and said power connector (160) serves to provide electrical interface for easy plug and play installation of the internal module (130) and external module (150);
wherein the internal module (130) is located and embedded at inner rim (300a) of the tire such that it provides anti-theft feature to the built-in sensor (132), and said built-in sensor (132) is further provided with an air inlet hole (133) adapted for accuracy measurement of one or more parameters relating to the condition of the tire, and wherein the external module (150) is mounted and exposed on outer rim (300b) of the tire for easy battery replacement.

2. The crossover wireless tire monitoring system device (100) according to Claim 1, wherein the crossover wireless tire monitor system device (100) is adapted to replace the existing or original valve stem of the tire.

3. The crossover wireless tire monitoring system device (100) according to Claim 1, wherein the built-in battery (152) of the external module (150) is provided with a battery compartment to accommodate one or more batteries (153).

4. The crossover wireless tire monitoring system device (100) according to Claim 1, wherein the one or more batteries (153) are standard type of coin cell battery.

5. The crossover wireless tire monitoring system device (100) according to Claim 1, wherein the built-in battery (152) is protected by an air-tight cover (151).

6. The crossover wireless tire monitoring system device (100) according to Claim 5, wherein the air-tight cover (151) is adapted to facilitates ease of battery replacement.

7. The crossover wireless tire monitoring system device (100) according to Claim 1, wherein the external module (150) is provided with a rubber grommet (157) to prevent air leak around valve stem hole of vehicle wheel or rim (300) of the tire.

8. The crossover wireless tire monitoring system device (100) according to Claim 7, wherein the external module (150) is secured mounted onto the vehicle wheel or rim (300) of the tire by one or more hex nuts (159).

## Patentansprüche

1. - Systemvorrichtung zur drahtlosen Crossover-Reifenüberwachung (100) zum Messen eines oder mehrerer Parameter mit Bezug auf den Zustand des Reifens, wobei die Systemvorrichtung zur drahtlosen Crossover-Reifenüberwachung (100) Folgendes umfasst:
a) einen Ventilschaft (154);
b) ein internes Modul (130) mit einem eingebauten Sensor (132), der ausgelegt ist, um einstückig befestig zu sein oder vom Ventilschaft (154) entfernbar zu sein;
c) ein externes Modul (150) mit einer eingebauten Batterie (152), das ausgelegt ist, um vom Ventilschaft (154) entfernbar zu sein;
**dadurch gekennzeichnet, dass** der Ventilschaft (154) ein Einzelkopf- oder Doppelkopfventil ist, so dass ein Benutzer die eingebaute Batterie (152) vom externen Modul (150) während des Nachfüllens von Luft für den Fall, dass ein Doppelkopfventil verwendet wird, nicht entfernen oder abnehmen muss;
wobei das interne Modul (130) und das externe Modul (150) gemeinsam durch den Ventilschaft (154) verbunden sind, um eine einzige betriebsbereite Systemvorrichtung zur Überwachung zu bilden, der eingebaute Sensor (132) des internen Moduls (130) von der eingebauten Batterie (152) des externen Moduls (150) durch Kabeldrähte (155) an einen Leistungsverbinder (160) angetrieben ist, und der Leistungsverbinder (160) dazu dient, eine elektrische Schnittstelle für eine einfache Plug-and-Play-Installation des internen Moduls (130) und externen Moduls (150) bereitzustellen;
wobei das interne Modul (130) an einem inneren Rand (300a) des Reifens angeordnet und eingebettet ist, so dass es dem eingebauten Sensor (132) eine Diebstahlschutzfunktion (132) bereitstellt, und der eingebaute Sensor (132) weiter mit einem Lufteinlassloch (133) ausgestattet ist, das ausgelegt ist für die Genauigkeitsmessung eines oder mehrerer der Parameter mit Bezug auf den Zustand des Reifens, und wobei das externe Modul (150) auf dem äußeren Rand (300b) des Reifens für einen einfachen Austausch der Batterie montiert und ausgesetzt ist.

2. - Systemvorrichtung zur drahtlosen Crossover-Reifenüberwachung (100) nach Anspruch 1, wobei die Systemvorrichtung zur drahtlosen Crossover-Reifenüberwachung (100) ausgelegt ist, um den vorhandenen oder originalen Ventilschaft des Reifens zu ersetzen.

3. - Systemvorrichtung zur drahtlosen Crossover-Reifenüberwachung (100) nach Anspruch 1, wobei die eingebaute Batterie (152) des externen Moduls (150) mit einem Batteriefach ausgestattet ist, um eine oder mehrere Batterien (153) aufzunehmen.

4. - Systemvorrichtung zur drahtlosen Crossover-Reifenüberwachung (100) nach Anspruch 1, wobei die eine oder die mehreren Batterien (153) Knopfzellenbatterien vom Standardtyp sind.

5. - Systemvorrichtung zur drahtlosen Crossover-Reifenüberwachung (100) nach Anspruch 1, wobei die eingebaute Batterie (152) durch eine luftdichte Abdeckung (151) geschützt ist.

6. - Systemvorrichtung zur drahtlosen Crossover-Reifenüberwachung (100) nach Anspruch 5, wobei die luftdichte Abdeckung (151) ausgelegt ist, um einen einfachen Batterieaustausch zu ermöglichen.

7. - Systemvorrichtung zur drahtlosen Crossover-Reifenüberwachung (100) nach Anspruch 1, wobei das externe Modul (150) mit einer Gummidichtung (157) ausgestattet ist, um einen Luftaustritt um das Ventilschaftloch des Fahrzeugrads oder Rands (300) des Reifens zu verhindern.

8. - Systemvorrichtung zur drahtlosen Crossover-Reifenüberwachung (100) nach Anspruch 7, wobei das externe Modul (150) gesichert auf das Fahrzeugrad oder den Rand (300) des Reifens durch eine oder mehrere (159) Sechskantmuttern montiert ist.

## Revendications

1. - Dispositif de système de surveillance de pneu sans fil de croisement (100) pour mesurer un ou plusieurs paramètres relatifs à l'état du pneu, le dispositif de système de surveillance de pneu sans fil de croisement (100) comprenant :
a) une tige de valve (154) ;
b) un module interne (130) avec un capteur intégré (132) qui est agencé pour être fixé d'un seul tenant ou être détachable de la tige de valve (154) ;
c) un module externe (150) avec une batterie intégrée (152) qui est agencé pour être détachable de la tige de valve (154) ;
**caractérisé par le fait que** la tige de valve (154) est une valve à tête unique ou à double tête, de telle sorte qu'un utilisateur n'a pas besoin de retirer ou de détacher la batterie intégrée (152) du module externe (150) pendant un remplissage d'air dans le cas où une valve à double tête est utilisée ;
le module interne (130) et le module externe (150) étant reliés de manière collaborative par l'intermédiaire de la tige de valve (154) pour former un unique dispositif de système de surveillance opérationnel, ledit capteur intégré (132) du module interne (130) étant alimenté par la batterie intégrée (152) du module externe (150) par l'intermédiaire de câbles métalliques (155) vers un connecteur d'alimentation (160), et ledit connecteur d'alimentation (160) servant à fournir une interface électrique pour une installation aisée, prête à l'emploi, du module interne (130) et du module externe (150) ;
le module interne (130) étant situé et intégré à une jante interne (300a) du pneu de telle sorte qu'il procure une fonction antivol au capteur intégré (132), et ledit capteur intégré (132) comportant en outre un trou d'entrée d'air (133) agencé pour une mesurer précise d'un ou plusieurs paramètres relatifs à l'état du pneu, et le module externe (150) étant monté et exposé sur une jante externe (300b) du pneu pour un remplacement aisé de batterie.

2. - Dispositif de système de surveillance de pneu sans fil de croisement (100) selon la revendication 1, dans lequel le dispositif de système de surveillance de pneu sans fil de croisement (100) est agencé pour remplacer la tige de valve existante ou d'origine du pneu.

3. - Dispositif de système de surveillance de pneu sans fil de croisement (100) selon la revendication 1, dans lequel la batterie intégrée (152) du module externe (150) comporte un compartiment de batterie pour recevoir une ou plusieurs batteries (153).

4. - Dispositif de système de surveillance de pneu sans fil de croisement (100) selon la revendication 1, dans lequel la ou les batteries (153) sont de type standard de pile bouton.

5. - Dispositif de système de surveillance de pneu sans fil de croisement (100) selon la revendication 1, dans lequel la batterie intégrée (152) est protégée par un couvercle étanche à l'air (151).

6. - Dispositif de système de surveillance de pneu sans fil de croisement (100) selon la revendication 5, dans lequel le couvercle étanche à l'air (151) est agencé pour faciliter un remplacement de batterie.

7. - Dispositif de système de surveillance de pneu sans fil de croisement (100) selon la revendication 1, dans lequel le module externe (150) comporte un passe-câble en caoutchouc (157) pour empêcher une fuite d'air autour du trou de tige de valve de la roue ou jante de véhicule (300) du pneu.

8. - Dispositif de système de surveillance de pneu sans fil de croisement (100) selon la revendication 7, dans lequel le module externe (150) est monté et fixé sur la roue ou jante de véhicule (300) du pneu par un ou plusieurs écrous hexagonaux (159).
